# EUROPEAN PATENT APPLICATION

(11) **EP 1 731 419 A2**
(43) Date of publication of application: **13.12.2006**
(21) Application number: 05731715.8
(22) Date of filing: 03.03.2005
(51) Int. Cl.: B64C 1/00

(54) **AIRCRAFT FUSELAGE**

(30) Priority: 04.03.2004 RU 2004106272
(71) Applicant: Karklin, Andrei Mikhailovich, Moscow, 115372 (RU); Bogdanov, Sergey Ivanovich, Moscow, 127490 (RU); Kalygina, Galina Vladimirovna, Moscow, 121096 (RU); Jamgarov, Stepan Grigoryevich, Moscow 105215 (RU)
(72) Inventor: JAMGAROV, Stepan Grigoryevich, Moscow, 105215 (RU); MAKSIMOV, Viktor Nikolayevich, Moscow, 111578 (RU)
(74) Representative: Benatov, Emil Gabriel
(86) International application number: PCT/RU2005/000094
(87) International publication number: WO 2005/084152

(57) **Abstract**

The invention related to bearing structures of aircraft, in particular to an airtight fuselage. The inventive aircraft fuselage whose width is substantially greater than the height in the closed cross-section thereof comprises frames which are successively disposed along the fuselage and to which the external skin is fixed, stringers connected to the skin and frames and the external elements of the frames. Said fuselage is provided, along the length of the airtight part thereof, with longitudinal bearing arched structures which reinforce the top and lower parts of the fuselage, are disposed on the lateral sides and comprise connected to each other a lower longitudinal bearing element, vertical posts arranged on the frames at a given number of spacings and the top bearing elements provided with arched elements placed between the adjacent posts.

## Description

The present invention relates to bearing structures of aircraft, in particular to an airtight aircraft fuselage and to bearing members of such fuselage.

Conventionally, currently aircraft of circular or near circular fuselage cross-section are employed and designed. The bearing scheme of a cross-section fuselage, typically including a skin, strong frames, stringers and transverse frame beams, is sufficiently effective. Overpressure acting normally to the skin is balanced by circular stresses in the skin (chain stresses). Radial deformation of the skin transfers, via stringer bend, transfers part of radial load to the frame, which is balanced by circular straining stresses of the frame. Rigidity of the skin, stringers and frames is such that staining stresses in the skin and the frames differ insignificantly and the bend of the stringers is small.

Circular shape fuselage design allows providing its static strength, durability, hardiness and maintenance characteristics.

However, the circular shape of the fuselage cross-section imposes certain restrictions on disposal solutions for accommodating passengers and loads. In addition, active search is carried out for more effective aerodynamic schemes of aircraft that would ensure obtaining enhanced aerodynamic quality that in aircraft having the circular fuselage, without aggravating weight and dimensional characteristics.

One of such alternative solutions is a fuselage of non-circular shape (see, for example, RF patent No.2174089), wherein the width is substantially greater than the height. In this case, the fuselage increases lift of the aircraft and in the meanwhile there appears a possibility to use more rational disposals to accommodate a great number of passengers in a row, to dispose loads in a separate load compartment and in the tail portion, maintenance possibilities are enhanced, etc.

But simultaneously the non-circular shape of the fuselage results in a number of problems, which are not inherent in the circular fuselage.

The main case of loading the airtight fuselage of the non-circular shape, determining static strength, durability and hardiness of the design is the case of overpressure.

Operation of bearing elements of the side portion of such a fuselage with a typical curvature radius, under effect of overpressure, is similar to operation of these elements in circular fuselages.

Operation of the upper and the lower portions of such a fuselage significantly differs form operation of bearing elements in circular cylindrical fuselages. The use of the conventional bearing scheme of circular fuselages having a skin, frames and stringers results in unacceptable weight outlays due to the bend of frames in areas of small curvature.

One of known solution to this problem is configuring a fuselage, the cross-section of which is formed from several merging one into another circular sections (see German application 1481622, Cl. B 64 C 1/00, 70). Vertical or longitudinal/vertical bearing elements may be installed in transition sites of these sections.

The stressed condition and construction elements in cylindrical portions of such a fuselage, beyond the edge effect zone at the transition sites, do not differ from those in circular fuselages. But in the transition zone, increased stresses occur in the vertical elements, which leads to the need to strengthen bearing elements and increase the weight or to increase the cross-section area without increasing the useful volume of the cabin. Furthermore, for the fuselage in question, it is necessary to install smoothing domes that make a part of the skin difficult to access in servicing and resulting in additional weight outlays.

The object of the present invention is providing an aircraft fuselage of a non-circular shape in which the width substantially exceeds the height and wherein the bearing scheme of construction and its bearing elements ensure static strength, pre-determined durability and hardiness when achieving for the aircraft as a whole weight effectives not less than for aircraft with a circular fuselage.

According to first aspect of the present invention, the fuselage of a flying machine has the cross-section that is oblong along the horizontal and having a width that is substantially greater than its height and comprises frames which are successively disposed along the fuselage and to which the external skin is fixed, stringers connected to the skin and the frames and the external elements of the frames, wherein said fuselage is provided, along the length of the airtight part thereof, with longitudinal bearing arched structures which reinforce the top and lower parts of the fuselage, are disposed on the lateral sides and comprises connected to each other a lower longitudinal bearing element, vertical posts arranged on the frames at a given number of spacings, and the top bearing elements provided with arched elements placed between the adjacent posts.

Further, said longitudinal bearing structures can be installed at lateral sides near the places of merging of the essentially flat part of the fuselage into its rounded part, and lower longitudinal bearing elements are provided with arched elements disposed between the adjacent posts.

In addition, said external elements of the frames include top transverse beams and lower transverse beams, the construction height of the lower beams being greater than that of the top beams and said longitudinal bearing structures are connected in the fuselage tail part to the pressure dome.

Furthermore, said vertical posts are formed as a wall and profiles supporting it.

Then the present invention will be described by way of preferred embodiments with references to the accompanying drawings, where:

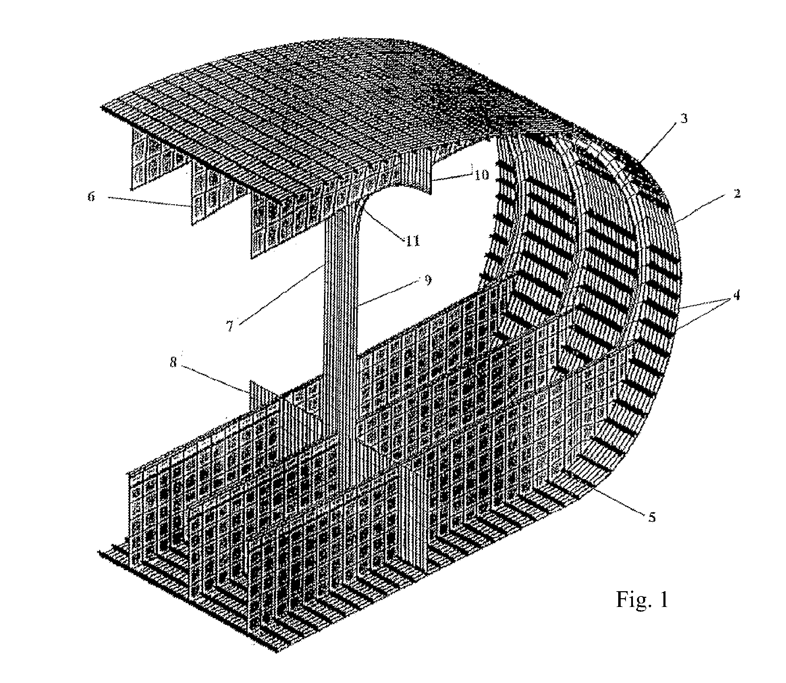

Fig.1 presents a perspective view of a part of fuselage showing its main bearing elements;

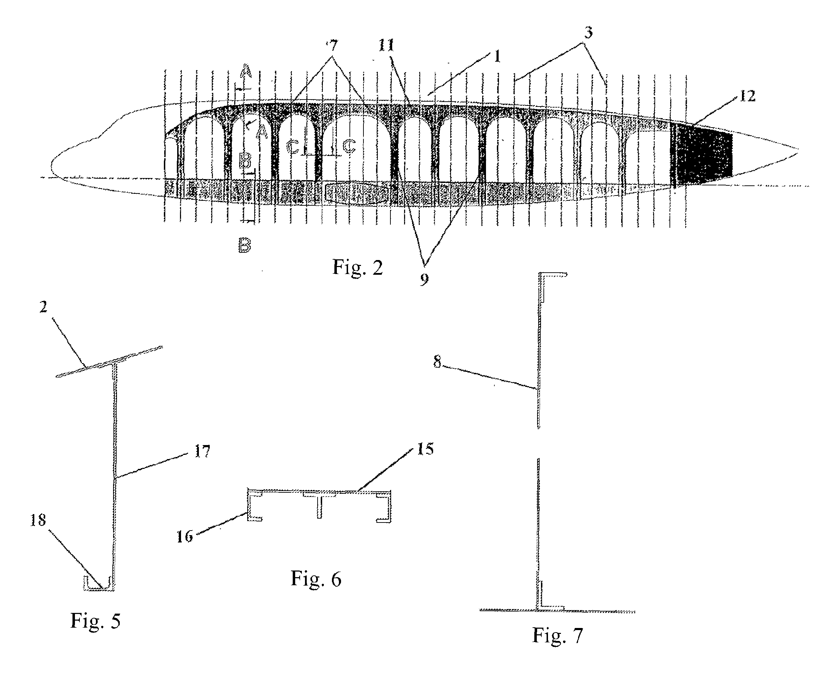

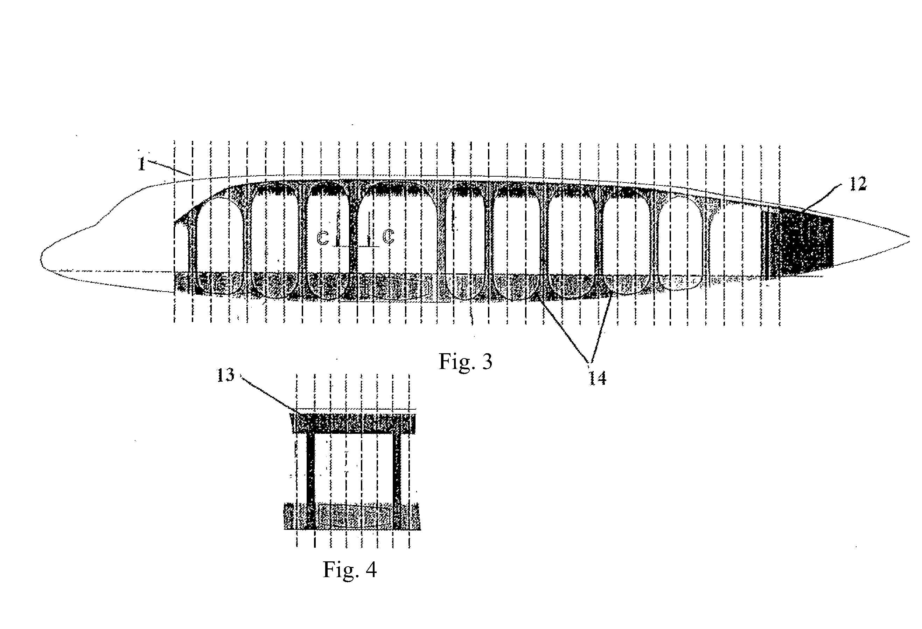

Fig.2 schematically presents a side view of the fuselage;
Fig.3 schematically presents a side view of another embodiment of the fuselage;
Fig.4 schematically presents a part of the fuselage of the first embodiment where arched elements are absent;
Fig.5 presents section A-A of Fig. 1;
Fig.6 presents section C-C of Fig.1;
Fig.7 presents section B-B of Fig. 1.

Fuselage 1 is formed from interconnected skin 2, frames 3, stringers 4. Inside fuselage 1, external elements of the frames are installed, including lower transverse beams 5 and top transverse beams 6. Because the dimension in height from the skin to the cabin from the top is significantly less than in the lower part of the fuselage, the construction height of the top transverse beams 6 is less that the corresponding height of the lower transverse beams 5. Mutual fixation of said bearing elements is effected by conventional methods and means and is in no way novel over the prior art of record.

In connection with the above-mentioned purpose of the present invention, side-disposed longitudinal bearing arched structures are introduced into the fuselage that support the top and lower parts of the fuselage. Position of the longitudinal bearing structures 7 is dictated by conditions of arrangement and weight optimisation of frame structures. In particular, they may be installed near transition of essentially flat part of the fuselage to its rounded part. Each longitudinal bearing structure 7 includes interconnected lower longitudinal bearing element 8 of a beam type, vertical posts 9 arranged on frames at a given number of spacings, for example, at 2-5 spacings depending of the arrangement, and top bearing elements 10 having arched elements 11 placed between the adjacent posts 9.

Longitudinal bearing structures 7 extend up to the forward airtight part of the fuselage and in the tail part they are fixed to the pressure dome 12.

The top bearing elements 10 at certain places along the fuselage length, due to considerations of arrangement or rationality of the bearing scheme, for example in the centre wing region, where the spacing distance between the frames is increased, may not have arched elements 11. At these places, element 10 may be a bearing beam 13. In the other embodiment of the claimed fuselage 1, the lower longitudinal bearing elements 8 have arched elements 14 placed between the adjacent posts 9. As in the case of the top arched elements 11, the lower arched elements 14 may be absent in individual spacings, for example in the centre wing region.

Vertical posts 9 are a conventional structure, including wall 15 with supporting profiles 16. The top 10 and lower 8 bearing elements may also be a wall 17 with profiles 18 supporting it.

The above bearing scheme is used for the airtight part of fuselage 1, which is clearly presented in the drawings.

Operation of the bearing elements of the regular structure of the lateral part of the fuselage of non-circular shape, under exposure to overpressure, is similar to operation of these elements in conventional circular cylindrical fuselages. Thickness of the skin, rigidity of the stringers and frames in this part of the fuselage are determined as in circular cylindrical fuselages only by the radius of curvature. Operation of the bearing elements in the top and lower parts of the fuselage of non-circular shape differs significantly from operation of these elements in circular cylindrical fuselages. The skin transfers by its bend practically all the load to the stringers, the stringers transfer by their bend this load to the frames. Elements 8, 9, 10 are designed to provide strength and rigidity of the frames. They close a significant portion of tensile loads occurring between the top and lower parts of the fuselage. In the top part of the fuselage, in order to transfer the load to the posts from the frames, which are not provided with posts, beam/arch structures are used that have greater rigidity as compared to beam structures. Similarly and simultaneously, such structures may be employed in the lower part of the fuselage 1.

The stressed state in the skin is mainly caused by stresses and strains of the frames in the circumferential direction, and in the axial direction by stresses and strains of the arches and stringers. Unevenness of stresses in the circumferential direction enables to select favourable areas for arranging longitudinal butts that determine longevity of the fuselage structure.

An important feature providing hardiness of the fuselage is the design of the posts, which ensures multi-channel transfer of the stretching forces and is well tied with the arched version of the longitudinal elements of the fuselage.

The longitudinal elements of the structure begin in the area of a relatively small width of the fuselage where, according to the strength requirements, there is no need in a fastening post, and then are smoothly built up to the required rigidity in the regular part of the fuselage.

The present invention effectively solves the problem of providing a bearing scheme of a fuselage of non-circular shape in flying machines and allows designing aircraft with a more advanced aerodynamic scheme and favourable weight and dimensional characteristics.

The description presented here must not limit the present invention to the embodiments disclosed in it. It should be appreciated that various modifications of the claimed fuselage may be made based on the essence of the invention which is characterised by the claims.

## Claims

1. A fuselage of aircraft whose width is substantially greater than the height in the closed cross-section thereof, the fuselage comprising frames which are successively disposed along the fuselage and to which the external skin is fixed, stringers connected to the skin and frames and the external elements of the frames, wherein said fuselage is provided, along the length of the airtight part thereof, with longitudinal bearing arched structures which reinforce the top and lower parts of the fuselage, are disposed on the lateral sides and comprise connected to each other a lower longitudinal bearing element, vertical posts arranged on the frames at a given number of spacings and the top bearing elements provided with arched elements placed between the adjacent posts.

2. The fuselage according to claim 1, wherein said longitudinal bearing structures are installed on the lateral sides near the places of transition of substantially flat part of the fuselage into its rounded part.

3. The fuselage according to claim 1, wherein said lower longitudinal bearing elements have arched elements placed between the adjacent posts.

4. The fuselage according to claim 1, wherein said vertical posts are formed as a wall and profiles supporting it.

5. The fuselage according to claim 1, wherein said external elements of the frames include top transverse beams and lower transverse beams, the construction height of the lower beams being greater than the construction height of the top beams.

6. The fuselage according to claim 1, wherein said longitudinal bearing structures are connected in the tail part of the fuselage to the pressure dome.
